# EUROPEAN PATENT APPLICATION

(11) **EP 4 087 209 A1**
(43) Date of publication of application: **09.11.2022**
(21) Application number: 21172541.1
(22) Date of filing: 06.05.2021
(51) Int. Cl.: H04L 29/06, H04L 9/32, H04L 9/08, G06F 16/27

(54) **ENCRYPTED DATA TRANSMISSION BETWEEN CHANNELS OF A DECENTRALIZED DISTRIBUTED DATABASE**

(71) Applicant: Siemens Aktiengesellschaft, 80333 München (DE)
(72) Inventor: Singh, Saurabh Narayan, 81739 München (DE)

(57) **Abstract**

The invention provides a computer-implemented method for encrypted data transmission between nodes of a first and a second channel of a decentralized distributed database. The method involves generating a public key and related private key for a first channel of the decentralized distributed database using an asymmetric encryption method, storing the public key in the decentralized distributed database, requesting data of a second channel by a node of the first channel, encrypting the requested data by a node of the second channel using the public key of the first channel and outputting encrypted data, transmitting the encrypted data to a node of the first channel, and decrypting the data in the first channel using the private key.

## Description

The present invention relates to a computer-implemented method for encrypted data transmission between nodes of a first and a second channel of a decentralized distributed database, as well as an encrypting node and a decrypting node, and a computer program product.

Decentralized applications, e.g., blockchain applications, are in general built around ecosystems of participants and stakeholders. Some enterprise applications are limited in number of participants, but the majority have multiple participants and stakeholders. On one hand, such a setup creates a better transparency, decentralization and democratization of assets but on the other hand this can lead to potential confidentiality issues.

For a distributed network there are multiple use cases where all stakeholders do not necessarily benefit from being part of the same network for all transactions. This has for example led to creation of concepts like side chains, state channels or private transactions in a blockchain. Side chains and state channels allow parallelization of the transaction, increased data throughput and ingrained confidentiality in the application. But this also leads to complete isolation of the activities/transactions in the different sidechains/side-channels.

The data stored on a decentralized distributed database, e.g., a blockchain, usually requires multiple layers/levels of visibility specified based on roles and stakeholders involved in the process. The data on the main blockchain is visible to all the stakeholders, whereas certain data might have a limited visibility and access requirement. To solve these confidentiality issues, the network can usually be extended to multiple side chains and state channels containing subsets of the participants from the network and stakeholders. A state channel or channel can be understood as a "subnet" between a subset of network members for conducting private and confidential transactions.

Such sub-ecosystems and sidechains are used for confidential transactions, business specific smart contracts and execution between participants while providing a hashed audit trail on the mainchain. The side chains are formed by subsets of participants of the main ecosystem/network which could or could not be mutually exclusive, and these subsystems might need to interact with each other. However, such inter-channel communication is currently not available. Currently, the existing blockchain solutions allow for example a communication between different nodes but this is a direct communication via the protocols like REST or RPC. Hence, there is a need for a secure, confidential data exchange and a method for communication which can be verified by the consensus.

It is an objective of the present invention to find a way to provide confidential data transmission between different channels of a decentralized distributed network.

The object is solved by the features of the independent claims. The dependent claims contain further developments of the invention.

The invention provides according to the first aspect a computer-implemented method for encrypted data transmission between nodes of a first and a second channel of a decentralized distributed database, the method comprising the steps:
- generating a public key and related private key for a first channel of the decentralized distributed database using an asymmetric encryption method,
- providing the public key in the decentralized distributed database,
- requesting data of a second channel by a node of the first channel,
- encrypting the requested data by a node of the second channel using the public key of the first channel and outputting encrypted data,
   and
- transmitting the encrypted data to a node of the first channel.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can be for example personal computers, servers, programmable logic controllers (PLCs), handheld computer systems, Pocket PC devices, mobile radios and other communication devices that can process data in computer-aided fashion, processors and other electronic devices for data processing. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention. A module can, by way of example, also be a node of the distributed database system that for example performs/realizes the specific functions/features of an applicable module. The respective modules can, by way of example, also be in the form of separate or standalone modules. To this end, the applicable modules can comprise further elements, for example. These elements are for example one or more interfaces (e.g., database interfaces, communication interfaces - e.g., network interface, WLAN interface) and/or an evaluation unit (e.g., a processor) and/or a memory unit. The interfaces can be used for example to interchange (e.g., receive, convey, send or provide) data.

Within the context of embodiments of the invention, "provide", in particular in regard to data and/or information, can be understood to mean for example computer-aided provision. Provision is performed for example via an interface (e.g., a database interface, a network interface, an interface to a memory unit). This interface can be used for example to convey and/or send and/or retrieve and/or receive applicable data and/or information during the provision.

Within the context of embodiments of the invention, "smart contract process" can be understood to mean in particular an execution of a program code (e.g., of the control instructions) in a process by the distributed database system or the infrastructure thereof.

Within the context of embodiments of the invention, "transaction" or "transactions" can be understood to mean for example a smart contract, a data structure or a transaction data record that, in particular, each comprise one of the transactions or multiple transactions. Within the context of embodiments of the invention, "transaction" or "transactions" can also be understood to mean for example the data of a transaction of a data block of a blockchain. A transaction can in particular comprise a program code that provides a smart contract, for example. By way of example, within the context of embodiments of the invention, a transaction can also be understood to mean a control transaction and/or confirmation transaction. Alternatively, a transaction can, by way of example, be a data structure that stores data (e.g., the control instructions). A transaction can in particular comprise a program code that provides a smart contract, for example.

Alternatively, a transaction can, by way of example, be a data structure that stores data (e.g., the control instructions). A transaction can, by way of example, also be referred to as a message (that is to say a communication message storing data) or can be a message that, e.g., stores applicable data (e.g., control instructions). Embodiments of the invention therefore allows applicable transactions or messages to be interchanged.

Within the context of embodiments of the invention, a "program code" (e.g., a smart contract) can be understood to mean for example a program instruction or multiple program instructions, in particular stored in one or more transactions. The program code is in particular executable and is executed by the distributed database system, for example. This can be realized by means of an execution environment (e.g., a virtual machine). The program code is preferably executed by the infrastructure of the distributed database system. This involves for example a virtual machine being realized by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g., a blockchain), for example in a data block of the distributed database system. By way of example, the smart contract can be executed in the same way as explained in the definition of "program code", in particular within the context of embodiments of the invention.

Within the context of embodiments of the invention, a "(decentralized) distributed database (system)", can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database.

A "distributed database" can also be understood to mean for example a distributed database system that has at least some of its nodes and/or devices and/or infrastructure implemented by a cloud. By way of example, the applicable components are implemented as nodes/devices in the cloud (e.g., as virtual nodes in a virtual machine).

The distributed database (system) can be a public distributed database system (e.g., a public blockchain) or a closed (or private) distributed database system (e.g., a private blockchain), for example.

A distributed database system can also be a distributed communication system for data interchange or a peer-2-peer communication system or a peer-2-peer application, for example. This can be a network or a peer-2-peer network, for example. A/the distributed database system can also be a local distributed database system and/or a local distributed communication system, for example.

Within the context of embodiments of the invention, a "blockchain node", "node", "node of a distributed database system" and the like can be understood to mean for example devices (e.g., field devices), computers, smartphones, clients or subscribers that perform operations for (with) the distributed database system (e.g., a blockchain). Such nodes can, by way of example, execute transactions of a distributed database system or the data blocks thereof or insert or concatenate new data blocks with new transactions into the distributed database system by means of new data blocks.

Within the context of embodiments of the invention, a "channel" of the decentralized distributed database can be understood to mean a side- or state-channel which can be formed by only part, i.e. a subnet, of the network nodes. In other words, only part of the network nodes participates in the (side-)channel and can create a sidechain. A (side)-channel can be separated from but connected to the main channel. Multiple separate channels can be formed based on the decentralized distributed database. Channels may have their own consensus protocol.

It is an advantage of the invention that it enables data exchange between sidechains, which eliminates the potential of data leaks. The data exchange is preferably consensus-driven.

Data can for example be state data/status information, control data, communication data, etc.

Preferably the data exchange can be governed by smart contracts such that it is on the same level of security as any other transaction in the network while facilitating a more granular control over the data.

Hence, the proposed method supports data exchange between channels. It maintains the trust and immutability promises of the decentralized distributed network and adds confidentiality.

The exchange of data hence can be implemented as part of the database protocol. Therefore, the security is inbuilt in the protocol.

According to a preferred embodiment of the invention, the method can further comprise the steps:
- storing the private key in the first channel,
   and
- decrypting the encrypted data in the first channel using the private key.

According to another embodiment of the invention, the public key and related private key of the first channel can be generated by a randomly selected node of the first channel.

Randomly selecting a node to generate the public-private key pair provides more security.

According to another embodiment of the invention the generation of the public key and related private key can be verified by the remaining nodes of the first channel providing a verification result and storing the public key in the decentralized distributed database depending on the verification result.

Verification can in particular be based on a consensus method performed by the remaining nodes. Verification can for example comprise generation of the public-private-key pair by each of the remaining nodes and comparing the individual generation result with the proposed public-private key pair of the first node. In addition, data can be encrypted using the individually generated public key and the encrypted data are compared. If the comparison results in a match, the public key can be stored in the decentralized distributed database.

According to another embodiment of the invention the private key can be split into parts and these parts are distributed among a predefined number of nodes of the first channel.

This can be called "m out of n" secret sharing. It provides an additional level of security.

According to another embodiment of the invention at least a predefined portion of the split parts of the private key are defined to be required for decrypting the encrypted data.

One advantage of "m out of n" secret sharing is, that it allows for a better decentralized governance in case of sidechains and decentralized networks.

According to another embodiment of the invention the public key and related private key of the first channel can be generated by means of a program code executed by the nodes of the first channel.

The generation of a public-private-key pair can for example be performed by executing a program code, e.g., a smart contract, providing more security. Such smart contract can for example be part of the first channel, i.e., stored on the nodes of said channel. For example, the smart contract comprises method steps for generating the public-private-key pair for said channel.

According to another embodiment of the invention the requested data can be encrypted by a randomly selected node of the second channel.

According to another embodiment of the invention the data encryption is verified by the remaining nodes of the second channel.

Verification of the data encryption can for example be based on a consensus method executed by the remaining nodes, wherein preferably all nodes perform the data verification and majority of nodes need to agree on the verification result.

According to another embodiment of the invention the transmission of the encrypted data can be performed between designated nodes of the first and second channel, respectively.

For example, for each channel "points of pings", i.e., designated nodes which act as receiving and/or sending nodes can be defined.

According to another embodiment of the invention an information of the transmission of the encrypted data can be stored on the decentralized distributed database.

For maintaining a record of the data exchange, a transaction can be signed by nodes of each channel on the main chain confirming the data exchange.

The invention provides according to a further aspect a decrypting node of a channel of a decentralized distributed database, the requesting node comprising:
- a key generator which is configured to generate a public key and related private key for a first channel of the decentralized distributed database using an asymmetric encryption method,
- an interface which is configured to provide the public key to the decentralized distributed database,
- a receiver which is configured to receive encrypted data from a node of another channel, wherein the data have been encrypted using the public key,
   and
- a decryption module which is configured to decrypt the encrypted data using the private key.

The decrypting node can also be understood as requesting or receiving node for requesting/receiving data from another channel.

The invention provides according to a further aspect an encrypting node of a channel of a decentralized distributed database, the encrypting node comprising:
- a receiver which is configured to receive a data request of another channel of the decentralized distributed database,
- an interface which is configured to retrieve a public key of the requesting channel from the decentralized distributed database,
- an encryption module which is configured to encrypt the requested data using the retrieved public key,
   and
- an output module which is configured to output the encrypted data for transmission to a node of the other channel.

The encrypting node can also be understood as sending node for sending requested data to another channel.

The invention provides according to a further aspect a decentralized distributed database comprising at least two channels, which are separated from each other, wherein
- the first channel comprises an aforementioned decrypting node according to the invention,
   and
- the second channel comprises an aforementioned encrypting node according to the invention.

In addition, a computer program product (non-transitory computer readable storage medium having instructions, which when executed by a processor, perform actions) comprising software code portions for performing the method steps according to embodiments of the invention is claimed when said computer program product is run on a computer.

The invention will be explained in more detail by reference to the accompanying figures.
Fig. 1: shows a first exemplary embodiment of the invention;
Fig. 2: shows a second exemplary embodiment of the invention;
Fig. 3: shows a third exemplary embodiment of the invention; and
Fig. 4: shows a fourth exemplary embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively, and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

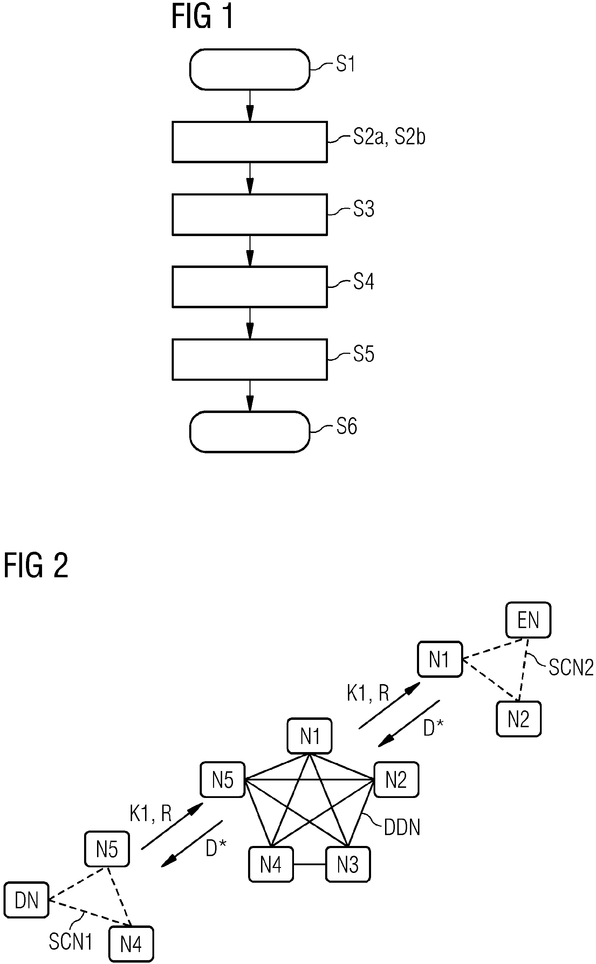

Fig. 1 shows as a first exemplary embodiment of the invention a flow-chart presenting method steps of a computer-implemented method for encrypted data transmission between nodes of two different channels of a decentralized distributed database.

The decentralized distributed database can for example be a blockchain network. It preferably comprises multiple nodes, wherein part of the nodes can form at least two channels. It is possible that a node is part of different channels.

In the first step S1 a public-private key pair is generated for a first channel of the decentralized distributed database using an asymmetric encryption method, e.g., Diffie-Hellman key exchange, Elliptic curve cryptography or RSA encryption. Preferably, a public-private key pair is generated for each channel of the decentralized distributed database.

The cryptographic key generation is for example performed by a randomly selected node of the first channel. Preferably, the remaining nodes of the first channel verify the generated public-private-key pair. This verification can for example be based on a consensus method, e.g., based on a majority vote, performed by the remaining nodes. For example, in order to verify the proposed public-private-key pair, each remaining node of the channel can also perform the cryptographic key generation and compare the respectively generated public-private-key pair with the proposed public-private-key pair. The remaining nodes can then vote on the comparison results in order to verify the proposed public-private key pair.

In the next step S2a, the public key can be stored in the main channel of the decentralized distributed database, i.e., it can be sent to other nodes of the decentralized distributed database and provided in the decentralized distributed database. Preferably, the public key is provided based on the verification result, i.e., preferably the public key is provided only in case of a positive verification. The private key is stored in the first channel, step S2b. Preferably, the private key is stored on each node of the first channel, such that each node can perform a data decryption.

In the next step S3 a data request for retrieving data from a second channel is sent to the second channel by the first channel. In particular, the data request can be sent by a designated node for data communication of the first channel to a designated node of the second channel.

In the next step S4, the requested data is encrypted by a node of the second channel using the public key of the first channel. To this end, the node of the second channel first retrieves the public key from the main channel of the decentralized distributed database.

In the next step S5, the encrypted data is transmitted via the network to a node of the first channel, preferably the designated node for data communication.

In the next step S6, the encrypted data is decrypted in the first channel by a selected node of the first channel using the stored private key. After decrypting the data can be further transmitted to other nodes of first channel.

Figure 2 shows a second exemplary embodiment of the invention. Figure 2 shows a decentralized distributed database DDN, e.g., a distributed ledger or a blockchain, comprising a plurality of nodes N1, ..., N5. These nodes can form subchannels SCN1, SCN2, which are subnets and as such part of the distributed database but preferably independent of each other. Data transfer can be enabled according to a method as shown exemplarily shown in Figure 1.

The method facilitates encrypted communication between multiple channels/sidechains and enables consensus on the data exchange. The data requested by another sidechain or stakeholder, can be provided by one of the members of the requestee sidechain in an encrypted form via peer-to-peer communication. The exchange can be noted in the main chain whereas the encryption and decryption would be performed using public-private encryption and can be extended to "m out of n" secret sharing and/or homomorphic secret sharing.

When starting the decentralized network DDN, the genesis state is copied across all participating nodes N1, ..., N5. A governing smart contract sets of rules in the form of smart contracts in the main chain. The governing smart contract is part of the genesis data block.

When a new channel SCN1, SCN2 is created, the governing smart contract registers the new channel at a registry using a unique channel identifier. All nodes of said channel are associated with it via this channel identifier. The identifier can be used for communication between the main chain and the side chains. For example, the governance smart contract can use the identifier to determine which channels request data exchange. Furthermore, a public key of a channel which is stored on the main chain can be assigned to this channel identifier.

Preferably, in each of the channels SCN1, SCN2 a public-private key pair is generated enabling confidential data transmission between the channels.

A public-private-key pair can for example be generated using an asymmetric encryption method by a randomly selected node of the first channel SCN1. The remaining nodes of the first channel can then verify the generated key pair. If the generated key pair is positively verified, the public key K1 is provided to the main chain of the decentralized distributed network DDN. If the verification result is negative, another node of the first channel SCN1 can for example be randomly selected to propose another public-private-key pair and verification thereof is repeated until the verification result is positive.

Preferably, the cryptographic key generation is managed by a smart contract. For example, such smart contract can be executed by the nodes of the channel. Such smart contract can define method steps for generating the public private key pair for the respective channel depending on an asymmetric encryption method. This smart contract is preferably also part of the genesis data block and can to this end be copied from the main chain to the channel. This smart contract can communicate with the governing smart contract and can share the public key K1.

A requesting node N5 of the first channel SCN1 can request data, e.g., state data, of the second channel SCN2, wherein the data request is preferably received by a designated receiving node N1. Requesting and receiving nodes can for example be predefined as so called "point of pings" and registered with the governing smart contract of the distributed database. Requesting and receiving nodes can for example be selected based on votes of the nodes of the respective channel.

The request R for data of the second channel SCN2 is forwarded to the second channel SCN2 by, e.g., the governing smart contract. For example, the requesting node N5 pings the governance smart contract being executed in the main chain, and the governing smart contract in turn pings the receiving node N1 in the second channel SCN2.

In the second channel SN2, a random node EN is selected to perform data encryption of the requested data. To this end, this encryption node EN requests the public key K1 of the requesting channel SCN1 from the governing smart contract. The public key K1 of the first channel can be identified by the assigned channel identifier of the first channel SCN1.

The requested data is encrypted by the encryption node EN using the public key K1 of the first channel. The data encryption is preferably verified by the remaining nodes of the second channel SCN2. Verification of the data encryption can for example be based on a consensus method executed by the remaining nodes or by a majority of the remaining nodes. That means, these nodes can perform a check of the data encryption and output a respective check result. Depending on the check result, the encrypted data D* can be send via the designated node N1 to the first channel.

Preferably, the encrypted data D* is then shared directly between the designated nodes N1, N5 of requester and requestee channels SCN1, SCN2. The direct sharing ensures that the encrypted form of confidential data is not stored on the main chain.

To maintain a record of exchange, both designated nodes N1, N5 can sign a transaction on the main chain confirming the exchange of the data.

The designated receiving node N5 can then forward the encrypted data D* to a decrypting node DN of the first channel SCN1. The decrypting node DN is configured to decrypt the encrypted data D* using the private key of the first channel SCN1.

In another version of this mechanism, the public-private key pair can be further strengthened by adding "m out of n" secret sharing. This means, the private key for on channel is split and distributed among a number n of the nodes of the first channel SCN1. To this end, the smart contract for generating the public-private-key pair requires an additional parameter, namely the number of channels n for splitting the private key. Preferably, a majority of nodes forms the "m" of "m out of n". The private key of the channel is split and distributed across these n nodes. When a new encrypted data is received, "m out of n" nodes are required to decrypt the data.

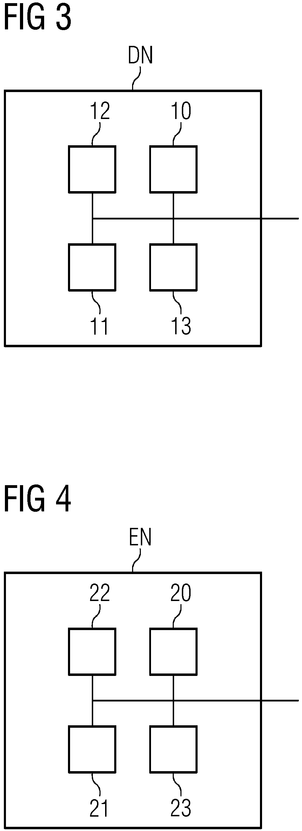

Figure 3 shows another exemplary embodiment of the invention in block representation. It shows a decrypting node DN which is part of a first channel of a decentralized distributed database. The decrypting node DN is configured to decrypt encrypted data, which is received from a second channel of the decentralized distributed database, wherein the second channels is preferably separated from the first channel.

The decrypting node DN comprises a key generator 10 which is configured to generate a public key and related private key, i.e., a public-private key pair, for the first channel using an asymmetric encryption method.

The decrypting node DN further comprises an interface 11 which is configured to provide the public key to the decentralized distributed database, preferably depending upon verification of the generated public-private key pair by other nodes of the first channel.

The decrypting node DN further comprises a receiver 12 which is configured to receive encrypted data from a node of the second channel, wherein the data have been encrypted using the public key of the first channel. Preferably, the receiver 12 receives the encrypted data from a designated receiving node located in the first channel. The data have for example been requested by another node and/or the decrypting node DN.

The decrypting node further comprises a decryption module which is configured to decrypt the encrypted data using the private key. The decrypted data can then be for example provided to other nodes of the first channel.

Figure 4 shows another exemplary embodiment of the invention in block representation. It shows an encryption node EN of a first channel of a decentralized distributed database. The encryption node EN is configured to cryptographically encrypt data which is requested by a node of a second channel.

The encryption node EN comprises a receiver 20 which is configured to receive a data request of a node of the second channel of the decentralized distributed database. Preferably, the data request is received by a designated receiving node of the first channel and forwarded to the encryption node EN.

The encryption node EN further comprises an interface 21 which is configured to retrieve a public key of the requesting channel from the decentralized distributed database.

The encryption node EN further comprises an encryption module 22 which is configured to encrypt the requested data using the retrieved public key.

The encryption node EN further comprises an output module 23 which is configured to output the encrypted data for transmission to a receiving node of the second channel. The encrypted data is for example sent to a designated sending node of the first channel and can then be transferred to a decrypting node, as exemplarily shown in Fig. 3, of the second channel for decrypting the requested data.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for encrypted data transmission between nodes of a first and a second channel (SCN1, SCN2) of a decentralized distributed database (DDN), the method comprising the steps:
- generating (S1) a public key and related private key for a first channel of the decentralized distributed database using an asymmetric encryption method,
- providing (S2a) the public key in the decentralized distributed database,
- requesting (S3) data of a second channel by a node of the first channel,
- encrypting (S4) the requested data by a node of the second channel using the public key of the first channel and outputting encrypted data,
and
- transmitting (S5) the encrypted data to a node of the first channel.

2. Computer-implemented method according to claim 1, further comprising the steps:
- storing (S2b) the private key in the first channel,
and
- decrypting (S6) the encrypted data in the first channel using the private key.

3. Computer-implemented method according to one of the preceding claims wherein the public key and related private key of the first channel are generated by a randomly selected node of the first channel.

4. Computer-implemented method according to one of the preceding claims, wherein the generation of the public key and related private key is verified by the remaining nodes of the first channel providing a verification result and storing the public key in the decentralized distributed database depending on the verification result.

5. Computer-implemented method according to one of the preceding claims wherein the private key is split into parts and these parts are distributed among a predefined number of nodes of the first channel.

6. Computer-implemented method according to claim 5 wherein at least a predefined portion of the split parts of the private key are defined to be required for decrypting the encrypted data.

7. Computer-implemented method according to one of the preceding claims wherein the public key and related private key of the first channel are generated by means of a program code executed by the nodes of the first channel.

8. Computer-implemented method according to one of the preceding claims wherein the requested data is encrypted by a randomly selected node of the second channel.

9. Computer-implemented method according to one of the preceding claims wherein the data encryption is verified by the remaining nodes of the second channel.

10. Computer-implemented method according to one of the preceding claims wherein the transmission of the encrypted data is performed between designated nodes of the first and second channel, respectively.

11. Computer-implemented method according to one of the preceding claims wherein an information of the transmission of the encrypted data is stored on the decentralized distributed database.

12. Computer program product directly loadable into the internal memory of a digital computer, comprising software code portions for performing the method steps of one of the preceding claims when said computer program product is run on a computer.

13. Decrypting node (DN) of a channel of a decentralized distributed database, the requesting node comprising:
- a key generator (10) which is configured to generate a public key and related private key for a first channel of the decentralized distributed database using an asymmetric encryption method,
- an interface (11) which is configured to provide the public key to the decentralized distributed database,
- a receiver (12) which is configured to receive encrypted data from a node of another channel, wherein the data have been encrypted using the public key,
and
- a decryption (13) module which is configured to decrypt the encrypted data using the private key.

14. Encrypting node (En) of a channel of a decentralized distributed database, the encrypting node comprising:
- a receiver (20) which is configured to receive a data request of another channel of the decentralized distributed database,
- an interface (21) which is configured to retrieve a public key of the requesting channel from the decentralized distributed database,
- an encryption module (22) which is configured to encrypt the requested data using the retrieved public key,
and
- an output module (23) which is configured to output the encrypted data for transmission to a node of the other channel.

15. Decentralized distributed database (DDN) comprising at least two channels, which are separated from each other, wherein
- the first channel comprises a decrypting node according to claim 13,
and
- the second channel comprises an encrypting node according to claim 14.
